# NEUE EUROPÄISCHE PATENTSCHRIFT

(11) **EP 0 626 884 B2**
(45) Veröffentlichungstag und Bekanntmachung des Hinweises auf die Entscheidung über den Einspruch: **06.11.2002**
(45) Hinweis auf die Patenterteilung: 27.05.1998
(21) Anmeldenummer: 94902703.1
(22) Anmeldetag: 07.12.1993
(51) Int. Cl.: B01J 21/08, C04B 35/14, B01J 37/00

(54) **KATALYSATORTRÄGER UND VERFAHREN FÜR SEINE HERSTELLUNG**
CATALYST CARRIER AND PROCESS FOR PRODUCING THE SAME
SUPPORT DE CATALYSEUR ET SON PROCEDE DE FABRICATION

(30) Priorität: 15.12.1992 DE 4242227
(43) Veröffentlichungstag der Anmeldung: 07.12.1994
(73) Patentinhaber: Heraeus Quarzglas GmbH & Co. KG, 63450 Hanau (DE)
(72) Erfinder: WERDECKER, Waltraud, D-63456 Hanau (DE); GERHARDT, Rolf, D-63546 Hammersbach (DE); KROCK, Wolfgang, D-63477 Maintal (DE)
(86) Internationale Anmeldenummer: EP9303440
(87) Internationale Veröffentlichungsnummer: WO94013399

(56) Entgegenhaltungen:
- EP-A- 0 235 419
- EP-A- 0 327 722
- EP-A- 0 393 356
- EP-B- 0 327 722
- DE-A- 3 912 504
- FR-A- 1 544 156
- FR-A- 2 313 973
- American Ceramic Society, Feb. 1981, American Ceramic Society, Feb. 1981, Bulletin, I. Lachman et al. "Termal Bulletin, I. Lachman et al. "Termal Expansion of Extruded Cordierite Ceramics", Expansion of Extruded Cordierite Ceramics", p. 202-205 p. 202-205

## Beschreibung

Die Erfindung betrifft einen Katalysatorträger mit einem gasdurchlässigen Trägerkörper mit einer porösen, hochkieselsäurehaltigen Oberflächenschicht nach dem Oberbegriff von Anspruch 1. Weiterhin betrifft die Erfindung ein Verfahren zur Herstellung eines Katalysatorträgers aus synthetischen, amorphen Kieselsäureteilchen mit einem Gewichtsanteil an SiO₂ von mehr als 99 Prozent, vorzugsweise mehr als 99,5 Prozent, wobei die Kieselsäureteilchen mit einer Flüssigkeit und mit Bindemittel zu einer plastischen Masse angeteigt werden und die Masse zu einem Grünkörper geformt und anschließend bei hoher Temperatur gesintert wird.

Katalysatoren werden unter anderem in der chemischen und pharmazeutischen Industrie, bei der Herstellung von Feinchemikalien und zur Abgasreinigung in Industrieanlagen sowie bei Gas-, Benzin- und Dieselmotoren eingesetzt. Der Anwendungsfall bestimmt dabei die Auswahl des Materials und der Form des Katalysatorträgers. Üblicherweise besteht dieser aus einem Trägerkörper aus einem chemisch inerten Material, auf die die katalytisch wirkende Substanz aufgebracht ist Im allgemeinen ist die Katalysewirkung umso besser, je größer die Oberfläche ist, die von der katalytisch wirkenden Substanz gebildet wird. Daher werden Trdgerkörper mit hoher spezifischer Oberfläche bevorzugt. Häufig weisen jedoch die als Trägermaterial geeigneten Werkstoffe nicht die erforderliche große spezifische Oberfläche auf. Im allgemeinen wird der Trägerkörper dann mit einer als "Washcoat" bezeichneten Oberflächenschicht versehen, die aus einem Material mit hoher spezifischer Oberfläche besteht.

Ein derartiger Katalysatorträger ist aus der US-PS 3,804,647 bekannt. Bei dem dort beschriebenen Katalysatorträger ist auf der Oberfläche eines monolithischen, gasdurchlässigen Trägerkörpers, der beispielsweise aus einer keramischen, einer glaskeramischen oder aus einer glasigen Zusammensetzung bestehen kann, eine Schlickerschicht abgeschieden, die feingemahlenes, poröses Borosilikatglas, mit einem Gewichtsanteil von 96 Prozent SiO₂ enthält. Nach dem Auftragen wird die Schlickerschicht getrocknet und bei ca. 800°C fest aufgesintert. Sie dient dann als Washcoat zur Vergrößerung der spezifischen Oberfläche des Katalysatorträgers. Die Sintertemperaturen und die Sinterzeiten der Schlickerschicht werden dabei so aufeinander abgestimmt, daß ein Aufschmelzen des porösen Borosilikatglas-Anteils verhindert wird, um dessen hohe spezifische Oberfläche möglichst zu erhalten.

Die so hergestellten Katalysatorträger können beispielsweise mit einer Wabenstruktur ausgebildet sein und in Verbindung mit einer katalytisch wirkenden Metallbeschichtung als Abgaskatalysator bis zu Temperaturen von ca. 870°C eingesetzt werden. Wegen der relativ geringen Kriechfestigkeit des Borosilikatglas-Anteils nimmt bei höheren Einsatztemperaturen die spezifische Oberfläche der Oberflächenschicht, und damit die katalytische Wirkung, jedoch rasch ab. Auf grund ihres schichtweisen Aufbaus aus Materialien unterschiedlicher Wärmeausdehnung weisen derartige Katalysatorträger eine relativ geringe Festigkeit auf; insbesondere kommt es gerade bei hohen Einsatztemperaturen zu Abplatzungen der Oberflächenschichten. Es hat sich auch gezeigt, daß die Säureresistenz des Trägers und der Oberflächenschichten der bekannten Katalysatorträger bei vielen Anwendungsfällen, wie beispielsweise zur Reinigung SO₂-haltiger Dieselmotor-Abgase, nicht ausreichend ist.

Sehr verbreitet sind Washcoat-Schichten, die auf Al₂O₃-Basis bestehen. Diese haben jedoch den Nachteil, daß das Al₂O₃ bei ca. 700°C eine Phasenumwandlung durchläuft, die eine Verringerung der spezifischen Oberfläche bewirkt, derart, daß die spezifische Oberfläche der Schicht gegen Null tendiert. Damit geht auch die katalytische Aktivität verloren.

Grundsätzlich sind für das Aufbringen des Washcoats eine Vielzahl von Verfahrensschritten erforderlich, für die jeweils ein Quafitätssicherungsschritt erforderlich ist Das Herstellverfahren für derartige Katalysatorträger wird dadurch aufwendig und kostspielig.

Aus der DE-A1 39 12 504 ist ein Verfahren zur Herstellung eines Katafysatorträgers in Form von Preßlingen bekannt, bei dem pyrogen hergestellte Siliciumdioxid-Teilchen mit Harnstoff, Methylcellulose, Aluminiumstearat und/oder Magnesiumstearat sowie Graphit unter Zusatz von Wasser homogenisiert werden. Die so hergestellte Masse wird anschließend bei einer Temperatur von 80°C bis 120°C getrocknet und wiederum zu einem Pulver zerkleinert. Dieses Pulver wird dann zu Preßlingen verpreßt und während eines Zeitraums von 0,5 bis zu 8 Stunden bei einer Tempertatur von 400°C bis 1200°C getempert.

Mit dem aus der DE-A1 39 12 504 bekannten Verfahren sind Katalysatorträger in Form von tablettenförmigen Preßlingen mit zum Beispiel zylindrischen, kugelförmigen oder ringförmigen Formen, mit einem Außendurchmesser von 2 mm bis 15 mm herstellbar.

Pyrogen hergestellte Siliciumoxide zeichnen sich durch eine extreme Feinteiligkeit und einen dementsprechend niedrigen Raumausfüllungsgrad aus. Aufgrund dieser Feinteiligkeit bereitet bereits die Verformung zu den bekannten, geometrisch einfach gestalteten Katalysator-Preßlingen einige Schwierigkeiten. Die Herstellung von Katalysatorträgern mit filigranen Strukturen ist mit dem bekannten Verfahren nicht möglich.

Der vorliegenden Erfindung liegt die Aufgabe zugrunde, einen gasdurchlässigen, temperatur- und säurefesten Katalysatorträger bereitzustellen, bei dem auf das Aufbringen eines Washcoats verzichtet werden kann sowie ein einfaches Verfahren anzugeben, mittels dem bruch- und kriechfeste Katalysatorträger kontinuierlich und preisgünstig herstellbar sind.

Ausgehend von dem. gattungsgemäßen Katalysatorträger wird diese Aufgabe hinsichtlich des Katalysatorträgers erfindungsgemäB dadurch gelöst, daß der Trägerkörper wabenfömnig ausgebildet ist und dass die spezifische Oberfläche zwischen 5 m²/g und 50 m²/g liegt, wobei der Alkali- und Erdalkaligehalt auf einen Wert von maximal 200 ppm eingestellt wird. Da der Trägerkörper und die Oberflächenschicht eine in einem gemeinsamen Arbertsgang geformte, chemisch und physikalisch homogene Struktur bilden, ist ein Abplatzen der Oberflächenschicht ausgeschlossen. Der Katalysatortrãger weist eine chemisch homogene Struktur auf, in der Spannungen, die beispielsweise aufgrund von Materialien mit unterschiedlichen Wärmeausdehnungskoeffizienten bei Temperaturwechseln verursacht werden, nicht auftreten können. Für den Einsatz des erfindungsgemäßen Katalysatorträger bei der Reinigung von Abgasen ist eine gasdurchlässige Struktur erforderlich. Insbesondere bei der Reinigung von Abgasen im Automobilbereich haben sich Katalysatorträger mit wabenförmiger Struktur. durchgesetzt Die Herstellung einer derartgen Struktur, wobei der Trägerkörper und die Oberflächenschicht in einem gemeinsamen Arbeitsgang geformt werden, ist beispielsweise mittels Strangpressen möglich.

Durch den hohen SiO₂-Gehatt von Oberflächenschicht und Trägerkorper von mindestens 99 Gew.-% ist der Katalysatorträger zum einen bei hohen Temperaturen, wie beispielsweise bei 1000 °C und mehr, und zum anderen auch in einer Umgebung einsetzbar, die eine hohe Säurebeständigkeit erfordert, ohne daß es zu merklichen Veränderungen des Trägers und der Oberflachenschicht kommt.

Durch die spezifische Oberfläche des Katalysatorträgers zwischen 5 m²/g und 50 m²/g wird auch beim Aufbringen der katalytisch wirkenden Substanzen unmittelbar auf die Oberflächenschicht des erfindungsgemäßen Kalalysatorträgers eine für viele Anwendungsfälle ausreichend große spezifische Oberfläche erhalten. Die spezifische Oberfläche wird auf maximal 50 m² eingestellt. Es hat sich gezeigt, daß Teile mit einer spezifischen Oberfläche bis zu 50 m²g eine ausreichende mechanische Festigkeit und gleichzeitig eine für katalytische Zwecke günstige Porenverteilung aufweisen. Die Bildung von Mikroporen, die zu einem verstärkten Edelmetallverbrauch beitragen, jedoch nicht am katalytischen Prozeß beteiligt sind, wird unterdrückt.

Als besonders vorteilhaft hat sich ein Katalysatortrãger mit einer spezifischen Oberfläche im Bereich zwischen 15 m²/g und 30 m²/g erwiesen. Dieser Bereich hat sich insbesondere im Hinblick auf eine ausreichend hohe Oberfläche des Katalysatortägers ohne zusätzlichen Washcoat bei gleichzeitig möglichst niedrigem Verbrauch an katalytisch wirkendem Beschichtungsmaterial als günstig erwiesen.

Insbesondere im Hinblick auf eine hohe mechanische Festigkeit und eine hohe chemische Beständigkeit gegenüber Säuren hat sich ein Katalysatorträger als günstig erwiesen, dessen SiO₂-Gehalt mindestens 99 Gew.-% beträgt und dessen Alkali- und Erdalkafigehalt auf einen Wert von maximal 200 ppm, vorzugsweise auf maximal 50 ppm eingestellt wird. Der niedrige Alkali- und Erdalkaligehalt ermöglicht ein Sintern des Katalysatorträgers aus hochkieselsäurehaltigem Pulver bei relativ hohen Temperaturen, ohne daß die Bildung von Cristobalit und die damit einhergehende Zerstörung oder Schwächung des gesinterten Katalysatortägers zu beobachten ist Die relativ hohen Sirrtertemperaturen tragen aber zu einer hohen mechanischen Festigkeit des Katatysatorträgers bei, wie sie in vielen Einsatzbereichen, wie beispielsweise zur Abgasreinigung im Automobilbereich, erforderlich ist.

Als besonders kriechfest haben sich Katalysatorträger erwiesen, die Metalloxide der III. bis VI. Gruppe der Übergangsmetalle und der Seltenen Erden enthalten. Auch die Zudotierung von Metalloxid in Form von Aluminiumoxid hat sich in dieser Hinsicht bewährt. Die genannten Metalloxide tragen neben der Stabilisierung der spezifischen Oberfläche zur Fixierung der im Glas verbleibenden Alkalispuren bei und verbessern dadurch auch die mechanische Stabilität des Katalysatorträgers. Derartige Katalysatorträger werden insbesondere bei Verfahrensfuhrungen eingesetzt, bei denen es mehr auf den Erhalt der katalytischen Wirkung bei hohen Einsatztemperaturen als auf die chemische Säurebeständigkeit ankommt Es hat sich aber als vorteilhaft erwiesen, den Gehalt an Metalloxiden insgesamt auf nicht mehr als 5000 ppm zu beschränken.

Hinsichtlich des Verfahrens wird die oben angegebene Aufgabe, ausgehend von dem gattungsgemäßen Veriahren dadurch gelöst, daß der Masse Plastifizierungsmittel zugesetzt werden und die Masse zu einem monolithischen Grünkörperstrang in Form einer Wabe gepresst wird, wobei der Alkali- und Erdalkaligehalt der Masse zusammen auf nicht mehr als 200 ppm, vorzugsweise nicht mehr als 50 ppm, eingestellt und der Grünkörper bei einer Temperatur im Bereich zwischen 800°C bis 1400°C gesintert wird. Der Zusatz von Plastizierungsmitteln ermöglicht die Herstellung des Grünkörperstrangs mittels der für keramische Massen bekannten, kontinuierlichen Strangpreßverfahren.

Entscheidend für die Eignung der Masse zur Herstellung eines wabenfärmigen Katalysatorträgers, der für hohe Einsatztemperaturen geeignet ist und der eine hohe Bruchfestigkeit aufweist, ist jedoch, daß der Alkaliund Erdalkaligehalt der Masse auf maximal 200 ppm, vorzugsweise auf weniger als 50 ppm, eingestellt und der Grünkörper bei einer Temperatur im Bereich zwischen 800°C bis 1400°C gesintert wird. Es hat sich gezeigt, daß bei den genannten Alkali- und Erdalkali gehalten die ansonsten beim Sintern bei relativ hoben Temperaturen zu erwartende Bildung von Cristoballt und die damit einhergehende Zerstörung oder Schwächung des gesinterten Körpers gegenüber mechanischen Belastungen vermieden wird und die erforderliche spezifische Oberfläche erhalten bleibt Die dadurch zu realisierenden, relativ hohen Sintertemperaturen gewährleisten anderereseits eine hohe mechanische Festigkeit des gesinterten Katalysatorträgers bei gleichzeitig hoher spezifischer Oberfläche.

Vor dem Sintern wird der Grünkörperstrang üblicherweise getrocknet und gegebenenfalls gereinigt.

Als besonders vorteilhaft hat sich ein Verfahren erwiesen, bei dem der Grünkörper bei einer Temperatur im Bereich zwischen 950°C und 1150°C gesintert wird. Hierdurch wird eine hohe mechanische Festigkeit erzielt, sowie seine Temperaturbeständigkeit bei entsprechend hohen Einsatztemperaturen sichergestellt.

Besonders geeignet zur Herstellung eines Katalysatorträgers mittels des erfindungsgemäßen Verfahrens ist der Einsatz von pyrogen hergestellten Kieselsäureteilchen. Diese zeichnen sich durch extreme Feinteiligkeit und eine entsprechend hohe spezifische Oberfläche, sehr hohe Reinheit, homogene Teilchenform und das Fehlen von innerer Porosität aus. Hierbei haben sich insbesondere Pulver aus pyrogenen Kieselsäureteilchen mit einer spezifischen Oberfläche zwischen 50 m²/g und 100 m²/g bewährt.

Als vorteilhaft hat sich ein Verfahren erwiesen, bei dem Kieselsäureteilchen mit einem mittleren Durchmesser im Bereich zwischen 10 nm und 40 nm eingesetzt werden. Derartige Pulver zeichnen sich durch eine hohe Sinteraktivität aus und erlauben die Herstellung von Katalysatorträgern mit hohen spezifischen Oberflächen.

Zweckmäßigerweise werden in dem Verfahren agglomerierte Kieselsäureteilchen eingesetzt. Diese agglomerierten Kiesesäureteilchen können, vorzugsweise bei Temperaturen zwischen 500 und 1200° C, kalziniert werden.

Die Agglomeration erfolgt vorzugsweise durch Sprühtrocknung, mit der sich sehr gleichmäßige, feinteilige Granulate erzeugen lassen. Unter Verwendung einer Druckdüse und einer Suspension mit niedrigem Feststoffgehalt, lassen sich nahezu sphärische Hohlgranulate mit geringer Schalendicke erzeugen. Diese Hohlgranulate werden beim Strangpressen teilweise zerstört und liefern eine gute Verzahnung (Steifigkeit) bei der Strangpreßmasse, ohne daß die Extrusion negativ beeinflußt wird.

Vorteilhaft kann es weiterhin sein, daß eine Mischung aus agglomerierten und unagglomerierten Kieselsäureteilchen eingesetzt wird. Der Einsatz bzw. der Zusatz von agglomerierten kieselsäureteilchen bringt den Vorteil, daß die Strangpreßmaße eine bessere Formbeständigkeit (höhere Steifigkeit) aufweist und nach der Extrusion weniger zum Einsacken neigt (Deformation unter dem Eigengewicht). Ein weiterer Vorteil ergibt sich beim Trocknen daraus, daß man schneller trocknen kann ohne das Risiko für Schwindungsrisse zu erhöhen. Das Auftreten von Schwindungsrissen wird insgesamt reduziert.

Beim Sintern des Grünkörperstrangs werden die Temperatur, die Haltezeit und die Atmosphäre bevorzugt so gewählt, daß der Katalysatorträger nach dem Sintern eine spezifische Oberfläche zwischen 5 m²/g und 50 m²/g, vorzugsweise zwischen 15 m²/g und 30 m²/g aufweist. Bei derartigen spezifischen Oberflächen kann für viele Einsatzbereiche auf das Üblicherweise auf die Oberfläche aufgebrachte "Washcoat", mit dem eine geeignete spezifische Oberfläche für das nachfolgende Beschichten mit dem katalytisch wirkenden Metall bereitgestellt wird, verzichtet werden. Das erfindungsgemäße Verfahren eignet sich besonders zum Strangpressen von Katalysatorträgern mit Wabenstruktur, wie sie beispielsweise zur Reinigung in industriellen Heißgasprozessen oder zur Reinigung von Abgasen von Automobilen insbesondere bei säurehaltigen Abgasen im Dieselbereich eingesetzt werden.

Der erfindungsgemäße Katalysator und das erfindungsgemäße Verfahren für seine Herstellung werden nachstehend anhand von Ausführungsbeispielen näher erläutert.

### Ausführungsbeispiel 1:

Aus den nachfolgend genannten Substanzen wird eine plastische Masse angeteigt:

| | |
|---|---|
| 4252 g | pyrogene Kieselsäure, mit einer BET-Oberfläche von 50 m²/g sowie einem Gesamtalkaligehalt von weniger als 34 ppm, |
| 3087 g | deionisiertes Wasser mit einer Leitfähigkeit 1 µS, |
| 190 g | Methylzellulose mit einem Gesamtalkaligehalt von weniger als 600 ppm, |
| 80 g | Fettsäure mit einem Gesamtalkaligehalt von weniger als 100 ppm, |
| 25 g | Polyglycol mit einem Gesamtalkaligehalt von weniger als 20 ppm |

Die so hergestellte Masse wird in einem Z-Arm-Kneter 15 min lang homogenisiert und anschließend zu einem monolithischen Grünkörperstrang mit Wabenstruktur mittels eines Kolbenextruders extrudiert. Hierzu wird in den Kolbenextruder ein rundes Mundstück mit quadratischer Zellenstruktur eingesetzt. Die Zellendichte beträgt 400 Zellen/inch². Es werden Grünkörperstränge mit einem Durchmesser von 40 mm und mit einer Länge von 1000 mm extrudiert. Diese werden anschließend auf 300 mm lange Stücke abgelängt und in einem Mikrowellenofen getrocknet. Zum Sintern werden die abgelängten Stücke mit einer Aufheizgeschwindigkeit von 5°C/min auf eine Temperatur von 1050°C in einerm Sinterofen erhitzt und 30 min lang bei dieser Temperatur gehalten. Die Luftzufuhr in den Sinterofen wird dabei vorteilhafterweise auf ca. 100 l/h eingestellt und konstant gehalten.

Die so hergestellten SiO₂-Wabenkörper weisen eine spezifische Oberfläche von 34 m²/g auf. Wie sich aus den Gewichts-Anteilen der oben angegebenen Substanzen ergibt, beträgt der SiO₂-Gehalt dieser Wabenkörper nach dem Ausheizen der organischen Substanzen und der Entfernung des Wassers mehr als 99,9 Gew.-%. Sie können ohne Aufbringen des üblichen Washcoats direkt mit der aktiven Katalysatorschicht versehen werden.

### Ausführungsbeispiel 2:

Es wird die gleiche Masse-Zusammensetzung wie in Ausführungsbeispiel 1 hergestellt. Als zusätzliche Komponenten werden 15 g pyrogenes Al₂O₃ mit einer spezifischen Oberfläche (BET) von 400 m²/g und 6 g Cernitrat zugegeben.

Aus der plastischen Masse werden Grünkörperstränge gemäß dem im Ausführungsbeispiel 1 beschriebenen Verfahren hergestellt. Diese werden mit einer Aufheizrate mit 5°C/min auf eine Temperatur von 1150°C aufgeheizt und 30 min lang bei dieser Temperatur gehalten. Die Luftzufuhr in den Sinterofen wird auf ca. 100 l/h eingestellt und konstant gehalten.

Die spezifische Oberfläche des so hergestellten Wabenkörpers beträgt 38 m²/g; sein SiO₂-Gehalt beträgt mehr als 99,5 Gew.-%.

Auch bei diesem Katalysatorträger kann auf ein Washcoat zur Vergrößerung der spezifischen Oberfläche verzichtet werden.

Durch den Zusatz von pyrogenem Al₂O₃ wird trotz der höheren Sintertemperatur eine ausreichend große spezifische Oberfläche erhalten. Die höhere Sintertemperatur führt außerdem zu einer höheren Festigkeit des SiO₂-Wabenkörpers, der aufgrund seiner hohen Kriechfestigkeit auch für den Einsatz bei besonders hohen Temperaturen geeignet ist.

### Ausführungsbeispiel 3:

Aus einer Masse aus

| | |
|---|---|
| 4000 g | einer Suspension, bestehend aus 30 Gew.-% pyrogener Kieselsäure mit einer BET-Oberfläche von 80 m²/g sowie einem Alkaligehalt von 20 ppm und 70 Gew.-% deionisiertem Wasser mit einer Leitfähigkeit von 1 µS, |
| 2657 g | pyrogener Kieselsäure mit einer BET-Oberfläche von 80 m²/g sowie einem Gesamtalkaligehalt von 20 ppm, |
| 172g | Methylzellulose mit einem Gesamtalkaligehalt von weniger als 600 ppm, |
| 80 g | Fettsäure mit einem Gesamtalkaligehalt von weniger als 90 ppm und |
| 23 g | Polyglycol mit einem Gesamtalkaligehalt von weniger als 20 ppm |

wird nach einer Homogenisierung von 30 Minuten in einem Z-Arm-Kneter in einem kontinuierlichen Extruder ein Grünkörperstrang extrudiert. Hierzu ist der Extruder mit einem quadratischen Mundstück mit einer Zellendichte von 200 Zellen/inch² versehen. Es werden Wabenstränge mit einer Kantenlänge von 50 mm und einer Länge von 1000 mm gezogen. Diese Stränge werden auf Teilstücke von 200 mm abgelängt und in einem Luftumwälzofen getrocknet.

Anschließend werden die so hergestellten Teilstücke mit einer Aufheizgeschwindigkeit von ca. 10°C/min auf eine Temperatur von 1000°C aufgeheizt und bei dieser Temperatur 60 min lang gehalten.

Die so hergestellten Wabenkörper weisen eine spezifische Oberfläche von 28 m²/g auf; sie können ebenfalls unmittelbar mit einer katalytisch aktiven Beschichtung versehen werden.

### Ausführungsbeispiel 4:

Unter Verwendung nachfolgender Substanzen

| | |
|---|---|
| 3800 g | pyrogener Kieselsäure mit einer BET-Oberfläche von 100 m²/g und einem Gesamtalkaligehalt von weniger als 10 ppm |
| 30 g | pyrogenes Al₂O₃ mit einer BET-Oberfläche von 400 m²/g |
| 400 g | Sprühgranulat in Form eines Hohlkornes mit einer mittleren Granulatgröße von 150 µm, hergestellt aus pyrogener Kieselsäure mit einer BET-Oberfläche von 100 m²/g, kalziniert bei 800°C an Luft |
| 3100 g | deionisiertes Wasser mit einer Leitfähigkeit von 0,2 µS |
| 190 g | Methylzellulose mit einem Gesamtalkaligehalt von weniger als 300 ppm |
| 80 g | Fettsäure mit einem Gesamtalkaligehalt von weniger als 100 ppm |
| 25 g | Polyglycol mit einem Gesamtalkaligehalt von weniger als 20 ppm |

wird in einem polymerausgekleideten Intensivmischer, der mit Messerköpfen ausgestattet ist, eine homogene Masse hergestellt und diese anschließend in einem kontinuierlichen Extruder zu einem Grünstrang extrudiert. Hierzu wird der Extruder mit einem ovalen Mundstück mit einer Zellendichte von 600 Zellen/inch² ausgestattet. Es werden 1 m lange Wabenstränge gezogen. Die Wabenstränge werden auf 200 mm abgelängt und in einem Mikrowellenofen getrocknet. Die so hergestellten Teilstücke werden bis 460°C mit einer Aufheizgeschwindigkeit von 4°C/min aufgeheizt und bei dieser Temperatur 60 min gehalten, anschließend werden sie mit einer Aufheizgeschwindigkeit von 10°C/min auf 1300°C aufgeheizt und bei dieser Temperatur 30 min lang gehalten.

Die so hergestellten Wabenkörper weisen eine spezifische Oberfläche von 48 m²/g auf. Sie können ohne Aufbringen einer Wash-Coat-Schicht unmittelbar mit einer katalytisch aktiven Beschichtung versehen werden.

Die so hergestellten Wabenkörper können bei Temperaturen bis zu 1000°C unter zusätzlicher Säurebelastung eingesetzt werden, ohne Schaden zu nehmen.

## Patentansprüche

1. Katalysatorträger mit einem gasdurchlässigen Trägerkörper mit einer porösen, hochkieselsäurehaltigen Oberflächenschicht, wobei der Trägerkörper und die Oberflächenschicht eine in einem Arbeitsgang geformte, chemisch und physikalisch homogene Struktur bilden, deren SiO₂-Gehalt mindestens 99 Gew % beträgt, **dadurch gekennzeichnet, dass** der Trägerkörper wabenförmig ausgebildet ist und dass die spezifische Oberfläche zwischen 5 m²/g und 50 m²/g liegt, wobei der Alkali- und Erdalkaligehalt auf einen Wert von maximal 200 ppm eingestellt wird.

2. Katalysatorträger nach Anspruch 1, **gekennzeichnet durch** eine spezifische Oberfläche zwischen 15 m²/g und 30 m²/g.

3. Katalysatorträger nach Anspruch 1 oder 2, **dadurch gekennzeichnet, daß** sein SiO₂-Gehalt mindestens 99,5 Gew.-% beträgt.

4. Katalysatorträger nach einem oder mehreren der Ansprüche 1 bis 3, **dadurch gekennzeichnet, daß** sein Alkali- und Erdalkaligehalt auf einen Wert von maximal 50 ppm eingestellt wird.

5. Katalysatorträger nach einem oder mehreren der Ansprüche 1 bis 4, **dadurch gekennzeichnet, daß** er Metalloxide der III. bis VI. Gruppe der Übergangsmetalle und/oder der Seltenen Erden enthält.

6. Katalysatorträger nach einem oder mehreren der Ansprüche 1 bis 5, **dadurch gekennzeichnet, daß** er Metalloxid in Form von Aluminiumoxid enthält.

7. Katalysatorträger nach Anspruch 5 oder 6, **dadurch gekennzeichnet, daß** der Gehalt an Metalloxiden insgesamt bis zu 5000 ppm beträgt.

8. Verfahren zur Herstellung eines Katalysatorträgers aus synthetischen, amorphen Kieselsäureteilchen mit einem einem Gewichtsanteil an SiO₂ von mehr als 99 Prozent, vorzugsweise von mehr als 99,5 Prozent, wobei die Kieselsäureteilchen mit einer Flüssigkeit und mit Bindemittel zu einer plastischen Masse angeteigt werden und die Masse zu einem Grünkörper geformt und anschließend bei hoher Temperatur gesintert wird, **dadurch gekennzeichnet, daß** der Masse Plastifizierungsmittel zugesetzt werden und die Masse zu einem monolithischen Grünkörperstrang in Form einer Wabe gepresst wird, wobei der Alkali- und Erdalkaligehalt der Masse zusammen auf nicht mehr als 200 ppm, vorzugsweise nicht mehr als 50 ppm, eingestellt und der Grünkorper bei einer Temperatur im Bereich zwischen 800°C bis 1400°C gesintert wird.

9. Verfahren nach Anspruch 8, **dadurch gekennzeichnet, daß** der Grünkörper bei einer Temperatur im Bereich zwischen 950°C und 1150°C gesintert wird.

10. Verfahren nach einem oder mehreren der Ansprüche 8 oder 9, **dadurch gekennzeichnet, daß** die Kieseisäureteilchen pyrogen hergestellt werden.

11. Verfahren nach einem oder mehreren der Ansprüche 8 bis 10, **dadurch gekennzeichnet, daß** Kieselsäureteilchen mit einem mittleren Durchmesser von 10 bis 40 nm eingesetzt werden.

12. Verfahren nach einem oder mehreren der Ansprüche 8 bis 11, **dadurch gekennzeichnet, daß** Kieselsäureteilchen mit einer spezifischen Oberfläche zwischen 50 m²/g und 100 m²/g eingesetzt werden.

13. Verfahren nach einem oder mehreren der Ansprüche 8 bis 12, **dadurch gekennzeichnet, daß** agglomerierte Kieselsäureteilchen verwendet werden.

14. Verfahren nach Anspruch 13, **dadurch gekennzeichnet, daß** die agglomerierten Kieseisäureteilchen kalziniert werden.

15. Verfahren nach Anspruch 14, **dadurch gekennzeichnet, daß** die agglomerierten Kieselsäureteilchen zwischen 500 und 1200° C kalziniert werden.

16. Verfahren nach einem der Ansprüche 13 bis 15, **dadurch gekennzeichnet, daß** die Agglomeration durch Sprühtrocknung erzeugt wird.

17. Verfahren nach Anspruch 16, **dadurch gekennzeichnet, daß** bei der Sprühtrocknung ein Hohlgranulat erzeugt wird.

18. Verfahren nach einem der Ansprüche 8 bis 17, **dadurch gekennzeichnet, daß** eine Mischung aus agglomerierten und unagglomerierten Kieselsäureteilchen verwendet wird.

## Claims

1. Catalyst support having a gas-permeable support body with a porous surface layer having a high silica content, wherein the support body and the surface layer form a chemically and physically homogeneous structure which is shaped in an operation and whose SiO₂ content is at least 99% by weight, **characterised in that** the carrier body is in the form of a honeycomb and **in that** the specific surface area is between 5 m²/g and 50 m²/g, the alkali metal and alkaline earth metal content being adjusted to a value of not more than 200 ppm.

2. Catalyst support according to claim 1, **characterised by** a specific surface area between 15 m²/gand 30 m²/g.

3. Catalyst support according to claim 1 or 2, **characterised in that** its SiO₂ content is at least 99.5% by weight.

4. Catalyst support according to one or more of claims 1 to 3, **characterised in that** its alkali metal and alkaline earth metal content is adjusted to a value of preferably not more than 50 ppm.

5. Catalyst support according to one or more of claims 1 to 4, **characterised in that** it contains metal oxides of the transition metals and/or of the rare earth metals of groups III to VI.

6. Catalyst support according to one or more of claims 1 to 5, **characterised in that** it contains a metal oxide in the form of alumina.

7. Catalyst support according to claim 5 or 6 **characterised in that** the total content of metal oxides is up to 5000 ppm.

8. Process for the production of a catalyst support from synthetic, amorphous silica particles containing more than 99% by weight, preferably more than 99.5% by weight, of SiO₂, the silica particles having been kneaded with a liquid and with binder to give a plastic material and the material having been molded into a green compact and then sintered at high temperature, **characterised in that** plasticisers are added to the material and the material is molded to give a monolithic green extrudate in the form of a honeycomb, the alkali metal and alkaline earth metal content of the material together being adjusted to not more than 200 ppm, preferably not more than 50 ppm, and the green compact being sintered at a temperature in the range between 800°C and 1400°C.

9. Process according to claim 8, **characterised in that** the green compact is sintered at a temperature in the range between 950°C and 1150°C.

10. Process according to one or more of claims 8 and 9 **characterised in that** the silica particles are prepared pyrogenically.

11. Process according to one or more of claims 8 to 10 **characterised in that** silica particles having a mean diameter of 10 to 40 nm are used.

12. Process according to one or more of claims 8 to 11 **characterised in that** silica particles having a specific surface area between 50 m²/g and 100 m²/g are used.

13. Process according to one or more of claims 8 to 12 **characterised in that** agglomerated silica particles are used.

14. Process according to claim 13 **characterised in that** the agglomerated silica particles are calcined.

15. Process according to claim 14 **characterised in that** the agglomerated silica particles are calcined at between 500 and 1200°C.

16. Process according to any of claims 13 to 15, **characterised in that** the agglomeration is produced by spray-drying.

17. Process according to claim 16 **characterised in that** hollow granules are produced in the spray-drying.

18. Process according to any of claims 8 to 17 **characterised in that** a mixture of agglomerated and unagglomerated silica particles is used.

## Revendications

1. Support de catalyseur comprenant un corps de support perméable aux gaz ayant une couche superficielle poreuse à forte teneur en acide silicique, où le corps du support et la couche superficielle constituent une structure chimiquement et physiquement homogène, formée dans une phase commune du processus, structure dont la teneur en oxyde de silicium (SiO₂) est au moins de 99 % en poids, **caractérisé en ce que** le corps du support est configuré en forme de nid d'abeilles et que la surface spécifique est comprise entre 5 m²/g et 50 m²/g, où la teneur alcaline et alcalino-terreuse est réglée sur une valeur de 200 ppm maximum.

2. Support de catalyseur selon la revendication 1, **caractérisé par** une surface spécifique comprise entre 15 m²/g et 30 m²/g.

3. Support de catalyseur selon la revendication 1 ou 2, **caractérisé en ce que** sa teneur en oxyde de silicium (SiO₂) est au moins de 99,5 % en poids.

4. Support de catalyseur selon l'une quelconque ou plusieurs des revendications 1 à 3, **caractérisé en ce que** sa teneur alcaline et alcalino-terreuse est réglée sur une valeur de 50 ppm maximum.

5. Support de catalyseur selon l'une quelconque ou plusieurs des revendications 1 à 4, **caractérisé en ce qu'**il contient des oxydes métalliques du groupe III à VI des métaux transitoires et/ou des terres rares.

6. Support de catalyseur selon l'une quelconque ou plusieurs des revendications 1 à 5, **caractérisé en ce qu'**il contient un oxyde métallique sous forme d'oxyde d'aluminium.

7. Support de catalyseur selon la revendication 5 ou 6, **caractérisé en ce que** la teneur en oxydes métalliques va au total jusqu'à 5.000 ppm.

8. Procédé de fabrication d'un support de catalyseur à partir de particules synthétiques, amorphes d'acide silicique ayant une partie en poids d'oxyde de silicium (SiO₂) de plus de 99 %, de préférence de plus de 99,5 %, où les particules d'acide silicique, avec un liquide et un liant, sont transformées en une masse plastique formant pâte et où la masse est formée en un corps vert, puis frittée à température élevée, **caractérisé en ce que** un plastifiant est ajouté à la masse et **en ce que** la masse est extrudée en une barre monolithique de corps vert en forme de nid d'abeilles, où la teneur à la fois alcaline et alcalino-terreuse est réglée sur une valeur non supérieure à 200 ppm, de préférence non supérieure à 50 ppm, et où le corps vert est fritté à une température comprise dans une plage de 800°C à 1400°C.

9. Procédé selon la revendication 8, **caractérisé en ce que** le corps vert est fritté à une température dans une plage comprise entre 950°C et 1.150°C.

10. Procédé selon l'une des deux ou les deux revendications 8 et 9, **caractérisé en ce que** les particules d'acide silicique sont produites de façon pyrogénée.

11. Procédé selon l'une quelconque ou plusieurs des revendications 8 à 10, **caractérisé en ce que** l'on utilise des particules d'acide silicique ayant un diamètre moyen compris entre 10 nm et 40 nm.

12. Procédé selon l'une quelconque ou plusieurs des revendications 8 à 11, **caractérisé en ce que** l'on utilise des particules d'acide silicique ayant une surface spécifique comprise entre 50 m²/g et 100 m²/g.

13. Procédé selon l'une quelconque ou plusieurs des revendications 8 à 12, **caractérisé en ce que** l'on utilise des particules agglomérées d'acide silicique.

14. Procédé selon la revendication 13, **caractérisé en ce que** les particules agglomérées d'acide silicique sont calcinées.

15. Procédé selon la revendication 14, **caractérisé en ce que** les particules agglomérées d'acide silicique sont calcinées à une température comprise entre 500°C et 1.200°C.

16. Procédé selon l'une quelconque des revendications 13 à 15, **caractérisé en ce que** l'agglomération est produite par séchage par pulvérisation.

17. Procédé selon la revendication 16, **caractérisé en ce que**, lors du séchage par pulvérisation, on produit un granulé creux.

18. Procédé selon l'une quelconque des revendications 8 à 17, **caractérisé en ce que** l'on utilise un mélange de particules agglomérées et non agglomérées d'acide silicique.
